# EUROPEAN PATENT APPLICATION

(11) **EP 4 759 595 A1**
(43) Date of publication of application: **17.06.2026**
(21) Application number: 25221104.0
(22) Date of filing: 05.12.2025
(51) Int. Cl.: B60K 15/07

(54) **IMPROVED FIXATION SYSTEM FOR TANKS FOR A VEHICLE AND TANK ASSEMBLY FOR A VEHICLE**

(30) Priority: 10.12.2024 IT 202400028083
(71) Applicant: IVECO S.P.A., 10156 Torino (IT)
(72) Inventor: JACQUEMY, Vincent, 10135 TORINO (IT); GEYWITZ, Benjamin, 10135 TORINO (IT); ARANDA SOMOLINOS, Angel, 10135 TORINO (IT)
(74) Representative: Studio Torta S.p.A.

(57) **Abstract**

Fixation system (1) for fixing a plurality of tanks (T) to a portion of a vehicle, the fixation system (1) comprising a first portion (2) and second portion (3), the first portion (2) being configured to allow the connection of the tanks (T) together, the second portion (2) being configured to allow the connection of the connected tanks via the first portion (2) to the portion of said vehicle.

## Description

### CROSS-REFERENCE TO RELATED APPLICATIONS

This patent application claims priority from Italian patent application no. 102024000028083 filed on December 10, 2024, the entire disclosure of which is incorporated herein by reference.

### TECHNICAL FIELD

The present invention concerns a fixation system for tanks in a vehicle.

The present invention finds its preferred, although not exclusive, application in fuel tanks, such as compressed natural gas tanks, in a heavy vehicle such as a truck. Reference will be made to this application by way of example below.

### BACKGROUND OF THE INVENTION

Heavy vehicles such as trucks can be propelled by different typologies of fuels such as compressed natural gas, CNG, or liquid natural gas, LNG, or any other typology of fluid fuel that can be fed to an engine of any possible typology.

Such fluid fuel is stored, in gas or liquid physical state, in tanks. Such tanks are carried by the vehicle and usually carried by vehicle chassis.

The fixation to the vehicle of such tanks is a complex and difficult operation that foresees different phases to allow a compact mounting of the tanks on the chassis and their correct positioning.

Indeed, the tanks should be fixed in a good manner on the chassis to avoid unproper release of the tanks during the operation of the vehicle.

Moreover, the tanks should be placed in a proper manner to guarantee a balanced weight positioning. Indeed, an unbalanced weight on the vehicle would worsen the maneuverability of the vehicle with consequent risk of accidents and increase of wear of some components.

Therefore, the need is felt to improve existing fixation system for tanks to a vehicle to allow a stable fixation and a balanced positioning of weights.

The object of the invention is to fulfil the needs discussed above.

An aim of the present invention is to satisfy the above mentioned needs in a cost-effective and optimized manner.

### SUMMARY OF THE INVENTION

The aforementioned aim is reached by a fixation system for tanks, a tank assembly and a vehicle as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:

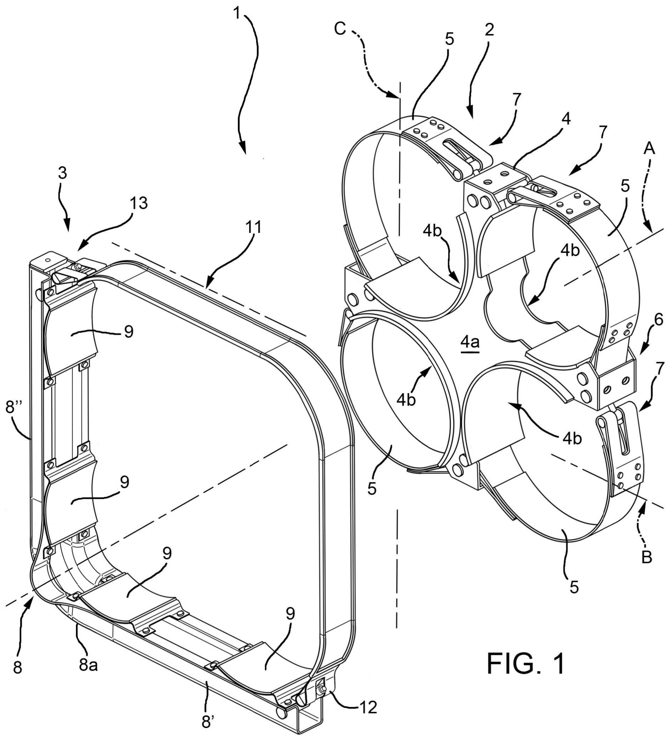

- Figure 1 is a perspective view of a fixation system for tanks according to the invention;
- Figures 2A to 2D are perspective views showing different mounting phases of tanks via a fixation system according to the invention.

### DETAILED DESCRIPTION OF THE INVENTION

In the attached figures it is shown with 1 a fixation system for tanks T for a vehicle (not shown)-

Fixation system 1 is configured to allow the fixation of a plurality of tanks T to a vehicle, in particular to a chassis (not shown) thereof.

In the disclosed example the tanks T have a cylindrical shape and extend along a first axis A that is usually coincident with the longitudinal axis A of the vehicle. Moreover, in the disclosed example the tanks T are four, clearly they may be two or a number greater according to the need of the vehicle.

Tanks T are configured to store a fluid in pressure, in particular compressed natural gas, CNG or liquid natural gas, LNG.

Fixation system 1 essentially comprises a first portion 2 and a second portion 3, wherein the first portion 2 is configured to connect a plurality of tanks T together while the second portion 3 is furthermore configured to connect the plurality of connected tanks T to a portion fixed to the chassis of the vehicle.

Indeed, preferably, a plurality of first and second portions 2, 3 are present, in particular at least a pair of first and second portions 2, 3.

The first portion 2 comprises a coupling portion 4 configured to accommodate a portion of at least one tank T and at least one fastening means 5 configured to secure at least one tank T to the coupling portion 4.

In detail the coupling portion 4 comprises a main portion 4a that defines a plurality of accommodation profiles 4b. Since tanks T are cylindrical and are four, the main portion 4a has a substantial cruciform shape and the accommodation profiles 4b are concaves.

In detail, the accommodation profiles 4b are equally spaced one with respect to the other with respect to the first axis A thereby defining a symmetrical shape about a second and third axis B, C, perpendicular to longitudinal axis A.

The fastening means 5 essentially comprises a belt and in particular fastening means 5 are provided for each tank T in order to couple each tank T at contact with the related accommodation profile 4b one independently to the other

In detail, the belt is connected by a first connection 6 to a first edge of the main portion 4a and by a second connection 7 to a second edge of the main portion 4a.
In particular, at least one between the first and second connections 7, 8 is selectively releasable in order to alternatively lock or secure the tank T within the accommodation profile 4b.

In the disclosed embodiment the second connection 7 is releasable while the first connection 6 is not.

In particular, one between the first and second connection 6, 7 comprise a movable connection.

In particular, the first connection 6 comprises a hinge configured to allow the movement of the fastening belt 5 about one of its coupling extremity.

Moreover, one between the first and second connection 6, 7 is adjustable in order to reduce or increase the portion of belt 5 in contact with the tank T to define a preload that maintains the tank T in contact to the accommodation profile 4b.

The second portion 3 comprises a fixation portion 8 configured to accommodate a portion of at least one tank T and to be secured to the vehicle chassis and at least one fastening means 12 configured to secure the tanks T to the fixation portion 8.

In detail the fixation portion 8 comprises a main portion 8a that defines a plurality of accommodation profiles 9. In detail, the main portion 8a is "L-shaped" and comprises a first member 8' and a second member 8'' substantially perpendicular one with respect to the other.

Preferably, first and second members 8', 8" are realized as one piece and comprises an L-shaped profiled element.

Consequently, since tanks T are cylindrical and are four, both first and second members 8', 8'' defines a pair of accommodation profiles 9 and the accommodation profiles 9 are concaves.

In detail, the accommodation profiles 9 are spaced in function of the dimensions of the main portion 4a of the coupling portion 4 that defines the relative position between tanks T.

The fastening means 11 essentially comprises a belt and in particular fastening means 11 are provided for securing all tanks T together to the fixation portion 8.

In detail, the belt is connected by a first connection 12 to a first edge of the first element 8' and by a second connection 13 to a second edge of the second element 8".

In particular, at least one between the first and second connections 12, 13 is selectively releasable in order to alternatively lock or secure the tanks T to the fixation element 8.

In the disclosed embodiment both the first and second connections 12, 13 are releasable.

In particular, one between the first and second connection 12, 13 comprise a movable connection.

In particular, both the first and second connection 12, 13 comprises a hinge configured to allow the movement of the belt about one of its coupling extremity.

Moreover, one between the first and second connection 12, 13 is adjustable in order to reduce or increase the portion of belt 5 in contact with the tanks T to define a preload that maintains the tank T in contact to the fixation portion 8.

The operation of the embodiment of the invention as described above is the following.

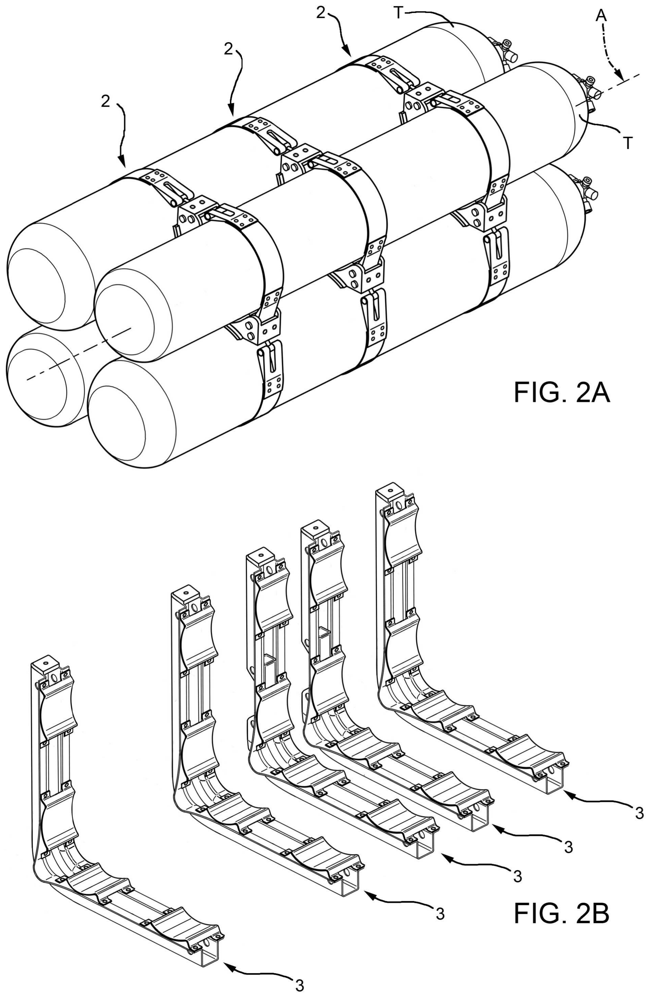

As depicted in figures from 2A to 2D, the tanks T are preliminary assembled via a plurality of first portion 2 that secure together the overall number of tanks T together (figure 2A). Indeed, it is sufficient to secure a tank T to the respective accommodation profile 9.

Parallelly (figure 2B) a plurality of second portions 3 are secured to the chassis of the vehicle (not visible), e.g. via treaded means or by welding or any suitable mechanical fixation that allows a secure and stable connection between these latter.

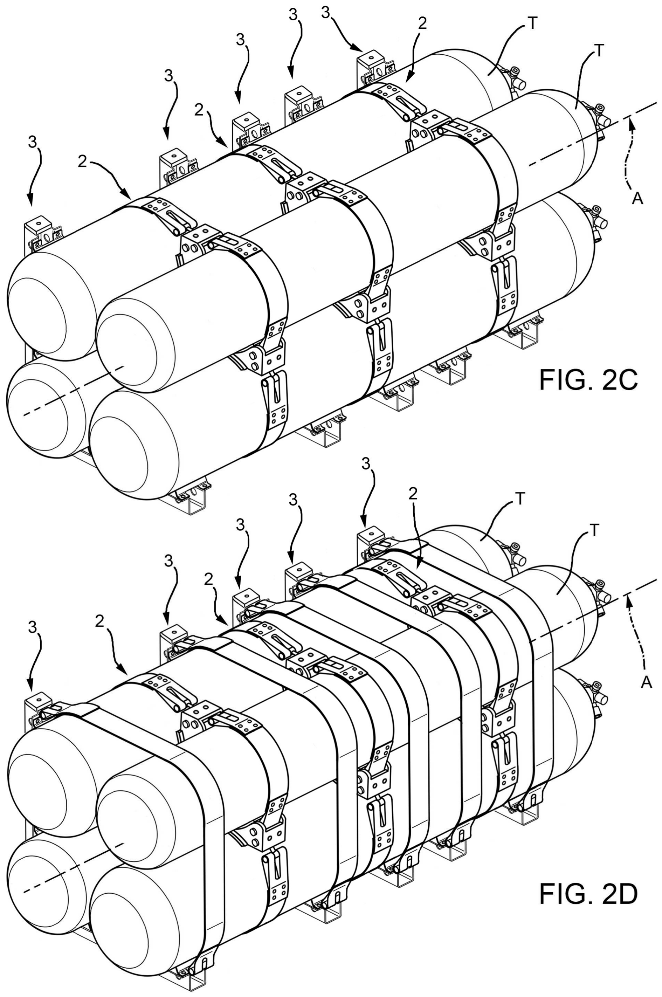

Then, (see figure 2C) the assembled tanks T as per figure 2A are placed over the second portions 3 that are secured to the vehicle.

Finally, (see figure 2D) the assembled tanks T are secured to the second portions 3 via fastening means 11.

In view of the above-described operation, the present invention further relates to a fixation method for tanks to a vehicle via a fixation system as described and comprising the following steps:
i) Connect together a plurality of tanks T together via first portion 2;
ii) Simultaneously, before or after with respect to step i), connect second portion 3 to a portion of a vehicle;
iii) Connect the plurality of tanks T connected in step i) to the second portion 3.

In view of the foregoing, the advantages of the fixation system for tanks, the tank assembly and the vehicle according to the invention are apparent.

Since tanks T can be preassembled, the fixation process is make easier and quicker via fixation elements that are lighter with respect to existing ones.

Moreover, the proposed system is versatile since can be adopted to different shape and lengths of tanks.

The quicker and easier fixation process allows to obtain a gain in time effort, thereby making the overall manufacturing of the vehicle cost-effective.

Furthermore, the proposed fixation system and process allows to make the fixation process safer since the tanks are first handled singularly and then only when fixed together moved to the last fixation step.

It is clear that modifications can be made to the described fixation system for tanks, tank assembly and vehicle which do not extend beyond the scope of protection defined by the claims.

For example, the number and the shape of the tanks may vary and accordingly the shape and numbers of the first and second portions.

Moreover, the fastening means preferably comprise a single belt but may comprise a plurality of belts or a chain or a rope or anything suitable to providing a preload.

Clearly, the first and second portions are disclosed as realized in a single piece but it is clear that can be realized as different elements connected together.

## Claims

1. Fixation system (1) for fixing a plurality of tanks (T) to a portion of a vehicle, said fixation system (1) comprising a first portion (2) and second portion (3), said first portion (2) being configured to allow the connection of said tanks (T) together, said second portion (2) being configured to allow the connection of said connected tanks via said first portion (2) to said portion of said vehicle.

2. Fixation system according to claim 1, wherein said first portion (2) comprises a coupling portion (4) configured to accommodate said plurality of tanks (T) and fastening means (5) configured to secure said tanks (T) to said coupling portion (4).

3. Fixation system according to claim 2, wherein said fastening means (5) are configured to secure each tank (T) to said coupling portion (4) independently one with respect to the other.

4. Fixation system according to claim 2 or 3, wherein said coupling portion (4) comprises a main portion (4a) and a plurality of accommodation profiles (4b), each accommodation profile (4b) being configured to accommodate a portion of one among said tanks (T).

5. Fixation system according to any of the preceding claims, wherein said second portion (3) comprises a fixation portion (8) comprising accommodation profile (9) to accommodate said connected plurality of tanks (T) and to allow fixation to a portion of said vehicle and fastening means (11) configured to secure said connected plurality of tanks (T) to said fixation portion (8).

6. Fixation system according to any of claims 2 to 5, wherein said fastening means (5, 11) comprises a belt.

7. Fixation system according to claim 6, wherein said belt is connected at its extremities via first and second connections (6, 7; 12, 13).

8. Fixation system according to claim 7, wherein at least one between first and second connections (6, 7; 12, 13) comprise a movable connection.

9. Fixation system according to claim 7 or 8, wherein at least one between first and second connections (6, 7; 12, 13) comprises a resealable connection.

10. Fixation system according to any of claims 7 to 9, wherein at least one between first and second connections (6, 7; 12, 13) is adjustable to vary the portion of said belt in contact with the tank/s.

11. Fixation system according to any of claims 2 to 10, wherein said accommodation profiles (5, 9) are concave.

12. Fixation system according to any of claims depending on claim 5, wherein said fixation portion (8) is L-shaped.

13. Fixation system according to any of claims depending on claim 5, wherein said fixation portion (8) comprises a profiled element.

14. Vehicle comprising a plurality of tanks (T) fixed to a chassis thereof via a fixation system according to any of the preceding claims.

15. Method for fixing a plurality of tanks (T) via a fixation system as claimed in any of claims 1 to 13, comprising the following steps:
i) Connect together a plurality of tanks (T) together via first portion (2);
ii) Simultaneously, before or after with respect to step i), connect second portion (3) to a portion of a vehicle;
iii) Connect the plurality of tanks (T) connected in step i) to the second portion (3).
